Europäisches Patentamt

European Patent Office

Office européen des brevets

(19)

(11) Numéro de publication : **0 573 339 A1**

## (12) DEMANDE DE BREVET EUROPEEN

(21) Numéro de dépôt : **93401372.3**

(22) Date de dépôt : **28.05.93**

(51) Int. Cl.⁵ : **C09D 9/00**

(30) Priorité : **02.06.92 FR 9206639**

(43) Date de publication de la demande :
**08.12.93 Bulletin 93/49**

(84) Etats contractants désignés :
**AT BE CH DE DK ES FR GB GR IE IT LI LU NL PT SE**

(71) Demandeur : **ELF ATOCHEM S.A.**
**4 & 8, Cours Michelet La Défense 10**
**F-92800 Puteaux (FR)**

(72) Inventeur : **Lallier, Jean-Pierre**
**38 rue Broca**
**F-75005 Paris (FR)**
Inventeur : **Fouquay, Stéphane**
**7 Parc de la Saône**
**F-76130 Mont-Saint-Aignan (FR)**

(74) Mandataire : **Hirsch, Marc-Roger et al**
**Cabinet Hirsch 34 rue de Bassano**
**F-75008 Paris (FR)**

(54) **Composition pour décaper les peintures.**

(57) La composition décapante comprend, en volume :
(a) 1 à 99% d'un solvant polaire aprotique, de préférence choisi dans le groupe consistant en : diméthylsulfoxyde (DMSO), diméthylformamide (DMF), N-méthylpyrrolidone (NMP), N-méthylmorpholine (NMm), γ-butyrolactone (BLo), acétonitrile (AcN) et leurs mélanges ; et
(b) 99 à 1% d'un éther choisi dans la famille des éthers présentant :
— un point éclair supérieur à 0°C,
— un volume molaire inférieur à 160,
— une molécule pourvue d'un ou de plusieurs groupes méthoxy.
Application au décapage des peintures glycérophtaliques ou des peintures alkyde uréthane sur un substrat constitué de bois.

EP 0 573 339 A1

La présente invention concerne une composition utile pour décaper les peintures et, plus particulièrement, une composition ne contenant ni solvants chlorés, ni alcalis. Elle se rapporte également au procédé de décapage de peintures déposées sur un substrat faisant emploi d'une telle composition.

US-A-3 600 322 décrit l'utilisation de mélanges de chlorure de méthylène et de méthanol pour enlever des peintures, des vernis ou des laques. D'autres brevets décrivent, pour la même application, l'utilisation d'un mélange contenant des lactames ou des lactones, dont notamment la N-méthyl-2-pyrrolidone ou la γ-butyro-lactone, en association avec d'autres composés actifs. Ces composés actifs peuvent être des alkylèneglycoléthers. Les documents PCT WO 86/03766, WO 88/06640, US-A-5 011 121 et US-A-5 015 410 sont illustratifs de l'utilisation de tels mélanges.

Il est connu d'après US-A-2 694 658 d'utiliser du DMSO en tant que solvant pour décaper les peintures.

Néanmoins, tous ces solvants présentent l'inconvénient d'être chers et d'être présents dans les compositions en des quantités importantes. Ainsi, il existe un besoin dans l'industrie des décapants d'utiliser un mélange aussi efficace que ceux de l'art antérieur mais dont le coût est moindre.

La demanderesse a ainsi trouvé de façon surprenante que ce but ainsi que d'autres sont atteints par l'utilisation d'une composition selon la présente invention.

Ainsi, la présente invention fournit une composition décapante comprenant, en volume:

(a) 1 à 99% d'un solvant polaire aprotique, de préférence choisi dans le groupe consistant en: diméthylsulfoxyde (DMSO), diméthylformamide (DMF), N-méthylpyrrolidone (NMP), N-méthylmorpholine (NMm), γ-butyrolactone (BLo), acétonitrile (AcN) et leurs mélanges; et

(b) 99 à 1% d'un éther choisi dans la famille des éthers présentant:
- un point éclair supérieur à 0°C,
- un volume molaire inférieur à 160,
- une molécule pourvue d'un ou de plusieurs groupes méthoxy.

Par volume molaire, on entend dans la présente description et dans les revendications auxquelles elle conduit, le rapport masse molaire/densité.

La présente invention a également pour objet une composition décapante pour le décapage de peintures sur un substrat, dans laquelle le solvant est le diméthylsulfoxyde. Selon un mode de réalisation, l'éther est choisi dans la famille des éthers présentant:
- un point éclair supérieur à 0°C,
- un volume molaire inférieur à 160,
- une molécule pourvue d'un ou de plusieurs groupes méthoxy,
- une molécule dépourvue de groupes hydroxy.

Selon un mode de réalisation préféré de la présente invention, le solvant polaire aprotique et l'éther sont présents dans la composition en des quantités respectives de 1 à 20% et de 99 à 80% en volume. De préférence, le rapport volumique est compris entre 5/95 et 15/85, et avantageusement, il est d'environ 10/90.

Selon une variante, le solvant polaire aprotique et l'éther sont présent dans la composition en des quantités respectives en volume de 20 à 80% et 80 à 20%. Selon cette variante, le rapport volumiques est avantageusement compris entre 40/60 et 60/40, et de préférence est égal à environ 50/50.

Selon un autre mode de réalisation, l'éther est choisi dans le groupe consistant en anisole, 1,2-diméthoxybenzène, 1,3-diméthoxybenzène, 1,4-diméthoxybenzène, 1,2,3-triméthoxybenzène, 2-méthoxy-1,3-dioxolane, 2-méthoxy-3,4-dihydropyrane, 2,5-diméthoxytétrahydrofurane, éthylèneglycoldiméthyléther, diéthylèneglycoldiméthyléther, 1-ter-butoxy-2-méthoxyéthane.

Selon un autre mode encore de réalisation particulièrement préféré de la présente invention, le solvant polaire aprotique est le diméthylsulfoxyde.

Selon un mode de réalisation de la présente invention, la composition comprend de plus un agent tensio-actif avantageusement halogèné. Tout tensio-actif connu, anionique, cationique, amphotère est approprié. On préfère un tensioactif fluoré c'est-à-dire présentant dans sa structure un ou plusieurs atomes de fluor. Cet agent tensio-actif fluoré est de préférence le composé répondant à la formule:

$$C_6F_{13}(OCH_2CH_2)_nH, \ \bar{n} \ = \ 10$$

par exemple disponible dans le commerce sous le nom FORAFAC® 1110.

Egalement, l'invention fournit une composition décapante pour le décapage de peintures acrylique-polyuréthane ou de peinture polyester-polyuréthane sur un substrat constitué de métal.

De même, l'invention fournit une composition décapante pour le décapage de peintures glycérophtalique ou de peinture alkyde uréthane sur un substrat constitué de bois.

La composition selon la présente invention peut aussi contenir des additifs classiques. Des exemples de ces additifs classiques sont: un cosolvant, un activateur, un ignifugeant, un épaississant, un stabilisant, un tensio-actif, un retardateur d'évaporation et, en général, tout additif pourvu que celui-ci ne soit pas un solvant chloré. En particulier, l'ajout de corps gras, d'origine d'animale ou végétale, par exemple certaines coupes estérifiés, permet de réduire l'inflammabilité du mélange. Des dérivés cellulosiques, tels que la méthylcellulose, ou des aérosils (tels que la silice pyrogénée), peuvent être ajoutés pour épaissir le mélange de solvants.

L'ajout d'un tensio-actif permet l'augmentation des vitesses de décapage. De même, la vitesse de décapage est augmentée avec l'ajout d'une partie de méthanol.

L'invention a aussi pour objet un procédé de décapage de peintures sur substrats, caractérisé en ce que lesdites peintures sont mises en contact avec une composition selon la présente invention. De préférence, la peinture est une peinture utilisée dans le secteur du bâtiment et le substrat est un substrat métallique tel que de l'aluminium, ou un substrat de bois.

La préparation des compositions selon l'invention peut se faire par simple mélange des différents composants, à l'aide d'un agitateur ou tout autre appareil approprié.

Le procédé de décapage est mis en oeuvre par mise en contact de l'objet ou de la surface à décaper avec la composition selon la présente invention. Cette mise en contact est continuée jusqu'à ce que la peinture gonfle, forme des cloques et se décolle. La mise en contact de l'objet ou de la surface à décaper avec la composition selon la présente invention peut être faite par divers moyens. Parmi ces moyens, on peut citer l'immersion, l'aspersion, l'enduction à l'aide d'un pinceau. La mise en contact est effectuée à une température comprise entre 5 et 40°C, avantageusement la température ambiante est généralement comprise entre 5°C et 25°C. Le temps de contact est compris entre 15 et 45 minutes.

La présente invention est maintenant décrite plus en détail par les exemples suivants, illustratifs de celle-ci et ne devant en aucun cas être considérés comme limitatifs de la présente invention, dont de nombreuses variantes sont aisément accessibles à l'homme de l'art.

EXEMPLES

Modes opératoires A à D

Les substrats enduits de peintures sont immergés dans 30 ml de composition décapante selon la présente invention, à température ambiante (20°C) pendant au moins 30 minutes. Les performances ont été estimées par visualisation des effets obtenus.

A. Peinture glycérophtalique + primaire/bois

Il s'agit d'une peinture veillie et donc parfaitement réticulée. Pour une composition solvante et non performante (o), la peinture glycérophtalique (couche brillante) reste intacte ou tout au plus, il apparaît à la binoculaire (grossissement G = 7x) quelques petites cloques disséminées sur la surface. Une composition solvante et performante (∗) conduit à une surface remplie de grosses écailles. Le substrat est alors rincé sous un jet d'eau (action mécanique) pour éliminer les écailles non adhérentes. La surface est ensuite visualisée à la binoculaire (G = 7x). Avec les combinaisons solvantes et très performantes (∗∗), on constate alors que la couche de primaire est partiellement entamée sur au moins la totalité de la surface.

B. Peinture alkyde-uréthane/bois

Comme précédemment, il s'agit toujours d'une peinture vieillie et donc parfaitement réticulée. Pour une composition solvante et non performante, on observe à la surface aucune action, la peinture restant brillante. Pour une composition solvante et performante (∗), la surface est remplie d'écailles, mais celles-ci restent accrochées même après un lavage à l'eau intensif. Par contre, après immersion dans une composition solvante et très performante (∗∗), on constate qu'un simple jet d'eau permet d'éliminer la quasi-totalité des écailles formées.

C. Peinture acrylique-polyuréthane/aluminium

Avec une composition solvante et non performante, on n'obtient généralement qu'un début d'attaque sur les bords de la plaque. Après une heure, on ne constate pas de progression du décapage. Une composition solvante et très performante (∗∗) conduit à un décollement du film en un seul bloc et en moins de 15 minutes. Pour une composition solvante et performante (∗), il faut rajouter quelques minutes d'immersion pour obtenir le même effet. Dans ce cas, le film est toujours décollé en un temps inférieur à 30 minutes. Pour les compositions performantes et très performantes, on observe toujours un allongement du film de quelques millimètres (allongement relatif < 30%).

D. Peinture époxy/aluminium

Après 1 heure d'immersion, on observe pour les compositions performantes (∗) un ramollissement de cette peinture très résistante. Un simple grattage permet alors de l'éliminer assez facilement. Une composition solvante décapante très performante (∗∗) à base d'acide formique réussit, par son mécanisme d'action chimique, à éliminer totalement la couche d'époxy sans opération de grattage.

Onze éthers ont été testés d'une part seuls et, d'autre part, en combinaison avec DMSO ou NMD selon un rapport en volume d'environ 10/90.

Ci-après sont donnés les résultats obtenus en mettant en oeuvre les 11 éthers seuls ou sous forme de compositions selon la présente invention ainsi que de l'action d'une composition contenant un méthyltertiobutyléther selon l'art antérieur.

Les effets observés sont les suivants pour les quatre types de peinture associés aux supports des modes opératoires A à D:

- lorsque les éthers sont employés seuls, on ne constate pratiquement aucune action de décapage:
- lorsque les éthers sont associés à 10% de DMSO ou 10% de NMP, on constate que l'on obtient un gonflement et un détachement du film de peinture sur au moins 30% de sa surface et donc un décapage efficace.

Les résultats obtenus sur les peintures et supports indiqués dans les points A à D ci-dessus sont donnés dans le tableau suivant:

| Ether (E) | 100% E | 90% E + 10% DMSO | 90% E + 10% NMP | 50% E + 50% DMSO |
|---|---|---|---|---|
| anisole | 0 | ** | ** | ** (a) (b) |
| 1,2-diméthoxybenzène | 0 | ** | ** | -- |
| 1,3-diméthoxybenzène | 0 | ** | ** | -- |
| 1,4-diméthoxybenzène | 0 | ** | ** | -- |
| 1,2,3-triméthoxybenzène | 0 | ** | ** | -- |
| 2-méthoxy-1,3-dioxolane | 0 | ** | ** | -- |
| 2-méthoxy-3,4-dihydropyrane | 0 | ** | ** | -- |
| 2,5-diméthoxytétrahydrofurane | 0 | ** | ** | -- |
| éthylèneglycoldiméthyléther | 0 | ** | ** | -- |
| diéthylèneglycoldiméthyléther | 0 | ** | ** | -- |
| 1-tert.butoxy-2-méthoxyéthane | 0 | ** | ** | -- |
| méthyltertiobutyléther | 0 | * à ** | -- | -- |

(a) tests mis en oeuvre sur peintures glycéro-phtalique et alkyde-uréthane

(b) une légère amélioration est notée par rapport au mélange 90% E/10% DMSO.

(--) test non mis en oeuvre

Les éthers employés selon l'invention sont moins inflammables que ceux employés à cette fin jusqu'à présent.

On peut obtenir, grâce aux présentes composition les meilleures performances (efficacité-inflammabilité) aux plus faibes coûts.

Les éthers employés selon l'invention sont moins inflammables que ceux employés à cette fin jusqu'à pré-

4

sent.

On peut obtenir, grâce aux présentes composition les meilleures performances (efficacité-inflammabilité) aux plus faibes coûts.

**Revendications**

**1.-** Composition décapante comprenant, en volume:

(a) 1 à 99% d'un solvant polaire aprotique, de préférence choisi dans le groupe consistant en: diméthylsulfoxyde (DMSO), diméthylformamide (DMF), N-méthylpyrrolidone (NMP), N-méthylmorpholine (NMm), γ-butyrolactone (BLo), acétonitrile (AcN) et leurs mélanges; et

(b) 99 à 1% d'un éther choisi dans la famille des éthers présentant:
- un point éclair supérieur à 0°C,
- un volume molaire inférieur à 160,
- une molécule pourvue d'un ou de plusieurs groupes méthoxy.

**2.-** Composition selon la revendication 1, dans laquelle le solvant polaire aprotique est le diméthylsulfoxyde.

**3.-** Composition selon la revendication 1 ou 2, caractérisée en ce que l'éther est choisi dans la famille des éthers présentant:
- un point éclair supérieur à 0°C,
- un volume molaire inférieur à 160,
- une molécule pourvue d'un ou de plusieurs groupes méthoxy,
- une molécule dépourvue de groupes hydroxy.

**4.-** Composition selon une quelconque des revendications 1 à 3, dans laquelle le solvant polaire aprotique et l'éther sont présents en des quantités respectives de 1 à 20% et de 99 à 80% en volume.

**5.-** Composition selon une quelconque des revendications 1 à 4, dans laquelle le solvant polaire aprotique et l'éther sont présents en des quantités respectives de 5 à 15% et 95 à 85% en volume.

**6.-** Composition selon une quelconque des revendications 1 à 5, dans laquelle le rapport volumique est d'environ 10/90.

**7.-** Composition selon une quelconque des revendication 1 à 3, dans laquelle le solvant polaire aprotique et l'éther sont présents en des quantités respectives de 20 à 80% et 80 à 20% en volume.

**8.-** Composition selon la revendication 7, dans laquelle le solvant polaire aprotique et l'éther sont présents en des quantités respectives de 40 à 60% et 60 à 40% en volume.

**9.-** Composition selon la revendication 8, dans laquelle le rapport volumique est d'environ 50/50.

**10.-** Composition selon une quelconque des revendications 1 à 6, dans laquelle l'éther est choisi dans le groupe consistant en: anisole, 1,2-diméthoxybenzène, 1,3-diméthoxybenzène, 1,4-diméthoxybenzène, 1,2,3-triméthoxybenzène, 2-méthoxy-1,3-dioxolane, 2-méthoxy-3,4-dihydropyrane, 2,5-diméthoxytétrahydrofurane, éthylèneglycoldiméthyléther, diéthylèneglycoldiméthyléther, 1-ter-butoxy-2-méthoxyéthane.

**11.-** Composition selon une quelconque des revendications 1 à 10, caractérisée en ce qu'elle peut aussi contenir des additifs classiques, parmi lesquels: un cosolvant, un activateur, un ignifugeant, un épaississant, un stabilisant, un tensio-actif, un retardateur d'évaporation et, en général, tout additif pourvu que celui-ci ne soit pas un solvant chloré.

**12.-** La composition selon une quelconque des revendications 1 à 11, comprenant de plus un agent tensio-actif fluoré qui est de préférence le composé répondant à la formule:

$$C_6F_{13}(OCH_2CH_2)_nH, \overline{n} = 10$$

**13.-** Composition décapante selon une quelconque des revendications 1 à 12, pour le décapage de peintures acryliquepolyuréthane ou de peinture polyester-polyuréthane sur un substrat constitué de métal.

**14.-** Composition décapante selon une quelconque des revendications 1 à 12, pour le décapage de peintures glycérophtalique ou de peinture alkyde uréthane sur un substrat constitué de bois.

**15.-** Procédé de préparation des compositions selon l'une quelconque des revendications 1 à 12, caractérisée en ce qu'elle est réalisée par simple mélange des différents composants, à l'aide d'un agitateur ou tout autre appareil approprié.

**16.-** Procédé de décapage de peintures sur substrats, caractérisé en ce que lesdites peintures sont mises en contact avec une composition selon une quelconque des revendications 1 à 12.

**17.-** Procédé selon la revendication 16, caractérisé en ce que la peinture est une peinture utilisée dans le secteur du bâtiment et le substrat est un substrat métallique consistant en aluminium ou un substrat de bois.

**18.-** Le procédé de décapage selon la revendication 16 ou 13, caractérisé en ce qu'il est mis en oeuvre par mise en contact de l'objet ou de la surface à décaper avec la composition selon la présente invention.

**19.-** Le procédé de décapage selon la revendication 18, caractérisé en ce que cette mise en contact est continuée jusqu'à ce que la peinture gonfle, forme des cloques et se décolle.

**20.-** Le procédé selon la revendication 18 ou 19, caractérisé en ce que la mise en contact de l'objet ou de la surface à décaper avec la composition selon la présente invention peut être faite par divers moyens.

**21.-** Le procédé selon la revendication 20, caractérisé en ce que parmi ces moyens, on peut citer l'immersion, l'aspersion, l'enduction à l'aide d'un pinceau.

**22.-** Le procédé selon la revendication 18 ou 19, caractérisé en ce que la mise en contact est effectuée à une température comprise entre 5 et 40°C, et le temps de contact est compris entre 15 et 45 minutes.

**23.-** Le procédé selon la revendication 22, caractérisé en ce que la température est la température ambiante.

Office européen
des brevets

**RAPPORT DE RECHERCHE EUROPEENNE**

Numero de la demande

EP    93 40 1372

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | EP-A-0 490 726 (ELF ATOCHEM) <br><br> * page 3, ligne 15 - ligne 20; revendications; exemples 1-7 * <br> --- | 1-7, 11-23 | C09D9/00 |
| A,D | WO-A-8 603 766 (CPS KEMI) <br> --- | 1 | |
| A | US-A-4 744 834 (NOOR HAQ) <br> --- | 1 | |
| A,D | US-A-2 694 658 (WILFRED J. CREPEAU) <br> * revendications 1,8 * <br><br> ----- | 1 | |

**DOMAINES TECHNIQUES RECHERCHES (Int. Cl.5)**

C09D

Le présent rapport a été établi pour toutes les revendications

| Lieu de la recherche | Date d'achèvement de la recherche | Examinateur |
|---|---|---|
| LA HAYE | 15 SEPTEMBRE 1993 | GIRARD Y.A. |